# EUROPÄISCHE PATENTSCHRIFT

(11) **EP 2 776 276 B1**
(45) Veröffentlichungstag und Bekanntmachung des Hinweises auf die Patenterteilung: **03.02.2016**
(21) Anmeldenummer: 12784254.0
(22) Anmeldetag: 12.11.2012
(51) Int. Cl.: B60N 2/56, B60N 2/58, B60N 2/70

(54) **SITZ UND SEINE VERWENDUNG**
SEAT AND ITS APPLICATION
SIÈGE ET SON UTILISATION

(30) Priorität: 11.11.2011 EP 11188880
(43) Veröffentlichungstag der Anmeldung: 17.09.2014
(73) Patentinhaber: Sympatex Technologies GmbH, 85774 Unterföhring (DE)
(72) Erfinder: BRANDT, Stefan, 85540 Haar (DE); MOUHASSIN, Mhamed, 80939 München (DE)
(74) Vertreter: CPW GmbH
(86) Internationale Anmeldenummer: PCT/EP2012/072363
(87) Internationale Veröffentlichungsnummer: WO 2013/068578

(56) Entgegenhaltungen:
- DE-A1-102005 004 971
- DE-A1-102009 033 254
- US-A1- 2009 253 362

## Beschreibung

Die vorliegende Erfindung betrifft einen Sitz und seine Verwendung.

DE 2004 052 076 A1 beschreibt einen Fahrzeugsitz umfassend ein Sitzelement mit mindestens einem zentralen Bereich und mindestens einem Randbereich. Als zentrale Bereiche werden die Bereiche bezeichnet, in denen der Körper eines durchschnittlich gebauten Menschen den Fahrzeugsitz berührt ("Körperkontaktbereiche"). Der mindestens eine zentrale Bereich besitzt einen luftundurchlässigen und wasserdampfdurchlässigen Sitzbezug und ein darunter angeordnetes Polsterelement. Zwischen dem Sitzbezug und dem Polsterelement ist ein luftführender Abstandshalter angeordnet, um einen ersten Luftstrom in einer Richtung parallel zum Sitzbezug durch den Abstandshalter zu führen. Der mindestens eine Randbereich umfasst einen luftdurchlässigen Randbereichssitzbezug, sodass ein zweiter Luftstrom durch den Sitzbezug hindurch nach außen strömen kann. Wenn sich zwischen dem Körper der auf dem Sitz sitzenden Person und dem Fahrzeugsitz, also in den Körperkontaktbereichen, Feuchtigkeit ansammelt, wird diese durch den wasserdampfdurchlässigen Sitzbezug hindurch vom Körper weg geleitet und gelangt zum Abstandshalter.

Dort wird die Feuchtigkeit durch den parallel zum Sitzbezug verlaufenden ersten Luftstrom erfasst und abtransportiert, wodurch eine Entfeuchtung und Kühlung in den Körperkontaktbereichen erfolgt. Ferner weist der in DE 10 2004 052 076 A1 beschriebene Sitz einen mit dem ersten Luftstrom kombinierten zweiten Luftstrom auf. Der zweite Luftstrom strömt aus den Randbereichen des Sitzes heraus, wodurch ein zusätzlicher Kühleffekt erzeugt wird, den die Person sofort wahrnimmt. Dieser zweite Luftstrom kann jedoch zu unangenehmen Zugerscheinungen führen, die als umso unangenehmer empfunden werden, je zugempfindlicher die den Sitz benutzende Person ist und je höher die im Fahrzeug herrschende Temperatur ist. Zur Abmilderung bzw. Vermeidung solch unangenehmer Zugerscheinungen schlägt DE 10 2004 052 076 A1 vor, den Zug erzeugenden zweiten Luftstrom durch eine geeignete Steuervorrichtung zu vermindern, bzw. ganz abzuschalten. Jedoch werden zugempfindliche Personen auch einen verminderten zweiten Luftstrom als unangenehm und somit dem Sitzkomfort abträglich empfinden. Wird der zweite Luftstrom abgeschaltet, leidet die Person unter der fehlenden Kühlwirkung, wodurch der Sitzkomfort ebenfalls leidet.

Ein gattungsgemässer Sitz ist aus dem Dokument DE102005004971A bekannt.

Daher stellt sich die vorliegende Erfindung die Aufgabe, einen Sitz zur Verfügung zu stellen, der die genannten Nachteile überwindet und dadurch einen Sitz mit erhöhtem Sitzkomfort zur Verfügung stellt.

Diese Aufgabe wird gelöst durch einen Sitz umfassend eine Sitzfläche und eine Rückenfläche, wobei die Sitzfläche und die Rückenfläche vollflächig mit einer Anordnung überzogen ist,
wobei die Anordnung eine erste, zweite und dritte Lage umfasst, wobei
- die erste Lage einen Sitzstoff oder ein Leder umfasst und eine einem Benutzer des Sitzes zugewandte Seite und eine vom Benutzer des Sitzes abgewandte Seite aufweist, wobei die erste Lage mit ihrer vom Benutzer abgewandten Seite auf
- der zweiten Lage angeordnet ist, die einen mindestens zwei Schichten umfassenden Absorber für Feuchtigkeit umfasst, wobei der Absorber
- eine erste Schicht (2a) aufweist, die der ersten Lage zugewandt ist und eine erste Hydrophilie (I) aufweist, und
- eine zweite Schicht (2b) aufweist, die der dritten Lage zugewandt ist und eine zweite Hydrophilie (II) aufweist,
   wobei die zweite Hydrophilie (II) größer ist als die erste Hydrophilie (I),
   wobei die zweite Lage eine der ersten Lage zugewandte Seite und eine von der ersten Lage abgewandte Seite aufweist, und wobei die zweite Lage mit ihrer von der ersten Lage abgewandten Seite auf
- der dritten Lage angeordnet ist, wobei die dritte Lage eine Luftleitschicht umfasst.

Im Rahmen der vorliegenden Erfindung bedeutet der Begriff "Feuchtigkeit" vorzugsweise Schweiß und Wasserdampf.

Dadurch, dass im erfindungsgemäßen Sitz die Sitzfläche und die Rückenfläche vollflächig mit der die erste, zweite, und dritte Lage umfassenden Anordnung überzogen ist, tritt an keiner Stelle des Sitzes, also auch nicht in den Randbereichen der Sitz- und Rückenfläche des Sitzes, eine auch noch so geringfügige Zugwirkung auf, sodass die auf dem Sitz sitzende Person einen erhöhten Sitzkomfort empfindet.

Ferner wird als Folge der die Sitz- und Rückenfläche vollflächig überziehenden Anordnung der genannten Lagen bewirkt, dass der erfindungsgemäße Sitz durch die gesamte Sitz- und Rückenfläche hindurch, also auch durch die Randbereiche von Sitz- und Rückenfläche hindurch, Feuchtigkeit, vorzugsweise Schweiß und Wasserdampf, abtransportiert.

Der Abtransport von Feuchtigkeit, vorzugsweise von Schweiß und von Wasserdampf, erfolgt im erfindungsgemäßen Sitz besonders effizient, weil der von der zweiten Lage umfasste mindestens zwei Schichten umfassende Absorber die Feuchtigkeit, vorzugsweise den Schweiß und den Wasserdampf, durch den von der ersten Lage umfassten Sitzstoff, bzw. durch das von der ersten Lage umfasste vorzugsweise perforierte Leder hindurch einsaugt (Saugeffekt), wonach die Feuchtigkeit, vorzugsweise Schweiß und Wasserdampf, von der von der dritten Lage umfassten Luftleitschicht aufgenommen und aus dem Sitz herausgeleitet wird.

Der vorstehend genannte Saugeffekt des mindestens zwei Schichten umfassenden Absorbers kommt dadurch zustande, dass die erste Schicht (2a) des Absorbers mit der ersten Hydrophilie (I) und die zweite Schicht (2b) des Absorbers mit der im Vergleich zur ersten Schicht (2a) größeren, zweiten Hydrophilie (II) einen Gradienten der Hydrophilie, und somit einen Absorptionsgradienten erzeugen, wobei der Gradient beim Übergang von Schicht (2a) zu Schicht (2b) stufenförmig ansteigt, wodurch Feuchtigkeit, vorzugsweise Schweiß und Wasserdampf, nur in Richtung der der ersten Lage abgewandten Seite, also vom Benutzer des Sitzes weg, strömen kann (Einbahnstraßeneffekt). Dabei wirkt die erste Schicht mit der geringsten Hydrophilie des Absorberschicht-Aufbaus als hydrophile Sperrschicht für Feuchtigkeit, vorzugsweise für Schweiß und Wasserdampf.

In einer weiteren Ausführungsformen des erfindungsgemäßen Sitzes kann der von der zweiten Lage umfasste Absorber
- eine erste Schicht (2a), die der ersten Lage zugewandt ist und eine erste Hydrophilie (I) aufweist,
- eine zweite Schicht (2b), die der dritten Lage zugewandt ist und eine zweite Hydrophilie (II) aufweist, und
- eine dritte Schicht (2c), die der dritten Lage zugewandt ist und eine dritte Hydrophilie (III) aufweist, enthalten,
wobei die zweite Hydrophilie (II) größer ist als die erste Hydrophilie (I) und die dritte Hydrophilie (III) größer ist als die zweite Hydrophilie (II).

In einer weiteren Ausführungsform des erfindungsgemäßen Sitzes kann der von der zweiten Lage umfasste Absorber zusätzlich zur dritten Schicht (2c) eine vierte Schicht (2d) mit einer vierten Hydrophilie (IV) aufweisen, die der dritten Lage zugewandt ist, sofern die Schichten (2a) bis (2d) die Relation Hydrophilie (IV) > Hydrophilie (III) > Hydrophilie (II) > Hydrophilie (I) erfüllen.

Im Rahmen der vorliegenden Erfindung wird die Hydrophilie bzw. die Absorption der Feuchtigkeit, vorzugsweise des Schweißes und des Wasserdampfs, der vom Absorber umfassten Schichten gemäß DIN 53924 (1997/03) als Steighöhe nach festgelegten Beobachtungszeiten quantifiziert, wobei die Steighöhe einer Schicht umso größer ist, je größer die Hydrophilie dieser Schicht ist.

In einer bevorzugten Ausführungsform des erfindungsgemäßen Sitzes mit einem zweischichtigen Absorber, der die Schichten (2a) und (2b) enthält, ist die Steighöhe der Schicht (2b) vorzugsweise mindestens 30 % höher als die Steighöhe der Schicht (2a).

In einer weiteren bevorzugten Ausführungsform des erfindungsgemäßen Sitzes mit einem zweischichtigen Absorber, der die Schichten (2a) und (2b) enthält, beträgt die Steighöhe der Schicht (2b) nach 30 Sekunden Beobachtungszeit vorzugsweise mindestens 30 mm und nach 2 Minuten Beobachtungszeit vorzugsweise mindestens 60 mm.

In einer weiteren bevorzugten Ausführungsform des erfindungsgemäßen Sitzes mit einem zweischichtigen Absorber bilden die Schichten (2a) und (2b) einen Zweischichtenverbund, wobei der Verbund (Vliesstoff) vorzugsweise dadurch zustande kommt, dass die Schicht (2a) mit der Schicht (2b) durch z.B. Wasserstrahlverfestigung, Verfestigung auf maschenbildenden Maschinen oder Verfestigung durch Nadeln zustande kommt.

Der im Körperkontaktbereich entstehende Schweiß muss also im erfindungsgemäßen Sitz nicht zuerst vom flüssigen Aggregatzustand in Wasserdampf umgewandelt werden, wie dies im von DE 10 2004 052 076 A1 beschriebenen Fahrzeugsitz der Fall ist, bei dem Schweiß, der im Körperkontaktbereich entstanden ist, zuerst in den wasserdampfförmigen Zustand umgewandelt werden muss, damit er von der nur für Wasserdampf durchlässigen Membran als Wasserdampf in den luftführenden Abstandshalter abtransportiert werden kann. Folglich verbleibt der Schweiß, der nicht in Wasserdampf umgewandelt wird, im Bereich zwischen Körper und Sitzbezug, worunter der Sitzkomfort leidet.

Im Gegensatz dazu wird im erfindungsgemäßen Sitz die Feuchtigkeit, vorzugsweise der Schweiß, der im Körperkontaktbereich entstanden ist, ohne den Umweg der Verdampfung und somit unverzüglich in den mindestens zwei Schichten umfassenden Absorber der zweiten Lage transportiert und wird aufgrund des vorstehend beschriebenen Einbahnstraßeneffekts vom Benutzer des Sitzes nicht als unangenehm wahrgenommen. Somit bietet der erfindungsgemäße Sitz einer darauf sitzenden Person zusätzlich zu den bereits beschriebenen vollständig vermiedenen Zugerscheinungen eine weitere Erhöhung des Sitzklimakomforts.

Im erfindungsgemäßen Sitz ist die erste Lage mit ihrer vom Benutzer des Sitzes abgewandten Seite auf der zweiten Lage angeordnet. In einer bevorzugten Ausführungsform des erfindungsgemäßen Sitzes ist die erste Lage mit ihrer vom Benutzer des Sitzes abgewandten Seite auf der zweiten Lage durch Verkleben, Verschweißen, Versteppen, Vernähen oder Flammkaschieren angeordnet, wobei das Verkleben punktweise oder mit einem offenporigen Klebervlies oder mit einem thermoplastischen atmungsaktiven Kleber aus Polyurethan, Polyamid oder Polyester durchgeführt werden kann.

Im erfindungsgemäßen Sitz ist die zweite Lage mit ihrer von der ersten Lage abgewandten Seite auf der dritten Lage angeordnet. In einer bevorzugten Ausführungsform des erfindungsgemäßen Sitzes ist die zweite Lage mit ihrer von der ersten Lage abgewandten Seite auf der dritten Lage durch Verkleben, Verschweißen, Versteppen, Vernähen oder Flammkaschieren angeordnet, wobei das Verkleben punktweise oder mit einem offenporigen Klebervlies oder mit einem thermoplastischen atmungsaktiven Kleber aus Polyurethan, Polyamid oder Polyester durchgeführt werden kann.

In einer weiteren bevorzugten Ausführungsform des erfindungsgemäßen Sitzes ist zwischen der zweiten und der dritten Lage eine wasserdichte und wasserdampfdurchlässige Membran angeordnet, welche eine der zweiten Lage zugewandte Seite und eine von der zweiten Lage abgewandte Seite aufweist. Dabei bedeutet der Begriff "wasserdichte Membran", dass die Membran unter den Messbedingungen der ISO 811 bei einem Druck von z.B. 10⁵ Pa über einen Zeitraum von 5 Minuten keine Flüssigkeit wie z.B. Wasser durchlässt. Ferner bedeutet der Begriff "wasserdampfdurchlässige Membran", dass die Membran einen als RET-Wert bezeichneten Wert des Wasserdampfdurchgangswiderstands von vorzugsweise < 20 [m²·Pa/W], besonders bevorzugt von 5 bis 15 [m²·Pa/W] aufweist. Der RET-Wert gibt die Wasserdampfpartialdruckdifferenz in Pa an, die zwischen der der zweiten Lage zugewandte Seite der Membran und der der dritten Lage zugewandten Seite der Membran herrscht, dividiert durch den Verdampfungswärmefluss in W pro m² der Membran. Der RET-Wert wird mit dem Hohenstein-Hautmodellversuch ermittelt, der in der Standard-Prüfvorschrift Nr. BPI 1.4 vom September 1987 des Bekleidungsphysiologischen Instituts e.V. Hohenstein beschrieben wird.

In einer weiteren bevorzugten Ausführungsform des erfindungsgemäßen Sitzes ist die Membran auf ihrer der zweiten Lage zugewandten Seite durch Verkleben, Verschweißen oder Flammkaschieren angeordnet, wobei das Verkleben punktweise oder mit einem offenporigen Klebervlies oder mit einem thermoplastischen atmungsaktiven Kleber aus Polyurethan, Polyamid oder Polyester durchgeführt werden kann.

In einer weiteren bevorzugten Ausführungsform des erfindungsgemäßen Sitzes ist die Membran auf ihrer der dritten Lage zugewandten Seite durch Verkleben, Verschweißen oder Flammkaschieren angeordnet, wobei das Verkleben punktweise oder mit einem offenporigen Klebervlies oder mit einem thermoplastischen atmungsaktiven Kleber aus Polyurethan, Polyamid oder Polyester durchgeführt werden kann.

In einer weiteren bevorzugten Ausführungsform des erfindungsgemäßen Sitzes ist die zwischen der zweiten und dritten Lage angeordnete Membran eine poröse Membran, die z.B. aus gerecktem Polytetrafluorethylen besteht, oder eine porenfreie Membran, die z.B. aus Polyetherester, Polyetheramid, Polyetherurethan oder Polyurethan besteht.

Auch in der bevorzugten Ausführungsform des erfindungsgemäßen Sitzes, worin zwischen der zweiten und der dritten Lage eine wasserdichte und wasserdampfdurchlässige Membran angeordnet ist, erfolgt der Abtransport von Feuchtigkeit, vorzugsweise von Schweiß und Wasserdampf, auf einem hohen Niveau, weil der von der zweiten Lage umfasste Absorber die entstehende Feuchtigkeit, vorzugsweise den Schweiß und den Wasserdampf, vom Körper des Sitzbenutzers und von der ersten Lage wegsaugt und zur Membran transportiert, welche dadurch sehr effizient die Feuchtigkeit, vorzugsweise den Schweiß und den Wasserdampf, in die von der dritten Lage umfasste Luftleitschicht transportiert.

In einer Ausführungsform des erfindungsgemäßen Sitzes umfasst die erste Lage einen Sitzstoff. In einer bevorzugten Ausführungsform des erfindungsgemäßen Sitzes ist der von der ersten Lage umfasste Sitzstoff ein Gewebe, eine Maschenware, ein Vliesstoff, oder ein 3-D-Oberstoff oder ein ähnliches textiles Flächengebilde, wobei die genannte Materialien perforiert oder nicht perforiert sein können, und wobei der Vliesstoff z.B. Mikrofasern enthält oder z.B. aus Mikrofasern besteht.

In einer weiteren bevorzugten Ausführungsform des erfindungsgemäßen Sitzes besteht der von der ersten Lage umfasste Sitzstoff aus Synthesefasern, z.B. aus Polyester, Polyamid oder Polyacrylnitril, oder aus Naturfasern, z.B. aus Baumwolle oder aus Fasern aus regenerierter Cellulose, z.B. aus Cuprophan oder Viskose, oder aus einer Mischung von mindestens zwei der genannten Faser-Arten.

In einer weiteren Ausführungsform des erfindungsgemäßen Sitzes umfasst die erste Lage ein Leder. In einer bevorzugten Ausführungsform des erfindungsgemäßen Sitzes ist das von der ersten Lage umfasste Leder ein atmungsaktives Naturleder oder ein atmungsaktives Kunstleder oder ein perforiertes Naturleder oder ein perforiertes Kunstleder.

Wie bereits erwähnt, umfasst die zweite Lage des erfindungsgemäßen Sitzes einen mindestens zwei Schichten umfassenden Absorber mit dem vorstehend beschriebenen Absorptionsvermögen für Feuchtigkeit, vorzugsweise für Schweiß und Wasserdampf. Der Absorber kann wegen seines hohen Absorptionsvermögens für Feuchtigkeit, vorzugsweise für Schweiß und Wasserdampf, ausgedrückt durch eine Steighöhe, die beispielsweise nach 30 Sekunden Beobachtungszeit mindestens 30 mm beträgt, auch als Superabsorber bezeichnet werden.

Jedoch fällt unter den Begriff "Absorber", bzw. "Superabsorber" im Rahmen der vorliegenden Erfindung nicht ein Polymer, das ein Vielfaches seines Eigengewichts an Feuchtigkeit, besonders Wasser, aufnehmen kann, wobei das Polymer stark quillt und ein Hydrogel bildet.

In einer bevorzugten Ausführungsform des erfindungsgemäßen Sitzes ist der mindestens zwei Schichten umfassende Absorber luftundurchlässig. Dabei bedeutet der Begriff "luftundurchlässig", dass der Absorber eine gemäß ISO 9237: 1995-12 (D) gemessene Luftdurchlässigkeit von weniger als 50 [L_{Luft}/(m²·s)], vorzugsweise von weniger als 0,5 [Liter_{Luft}/(m²·s)] aufweist.

In einer weiteren bevorzugten Ausführungsform des erfindungsgemäßen Sitzes ist zwischen der zweiten und der dritten Lage eine wasserdichte und wasserdampfdurchlässige Membran angeordnet, wobei die Membran eine gemäß ISO 9237: 1995-12 (D) gemessene Luftdurchlässigkeit von weniger als 0,5 [Liter_{Luft}/(m²·s)] aufweist. In dieser bevorzugten Ausführungsform kann der mindestens zwei Schichten umfassende Absorber auch luftdurchlässig sein, d.h. eine Luftdurchlässigkeit von mehr als 50 [L_{Luft}/(m²·s)] aufweisen.

In der bevorzugten Ausführungsform des erfindungsgemäßen Sitzes, worin zwischen der zweiten und der dritten Lage eine wasserdichte und wasserdampfdurchlässige Membran angeordnet ist, kann zum Schutz der Membran vor mechanischer Zerstörung durch Komponenten der Luftleitschicht zwischen Membran und Luftleitschicht eine luftdurchlässige und damit auch wasserdampfdurchlässige Schutzschicht angeordnet sein. Dabei kann die Schutzschicht als eine Wirkware oder als ein Absorber für Feuchtigkeit, vorzugsweise für Wasser, vorliegen.

Die von der dritten Lage des erfindungsgemäßen Sitzes umfasste Luftleitschicht weist eine der zweiten Lage zugewandte Seite und eine von der zweiten Lage abgewandte Seite auf.

In einer bevorzugten Ausführungsform des erfindungsgemäßen Sitzes weist die von der dritten Lage umfasste Luftleitschicht auf ihrer von der zweiten Lage abgewandten Seite einen Sitzschaum auf.

In einer weiteren bevorzugten Ausführungsform des erfindungsgemäßen Sitzes enthält entweder die erste Lage oder die zweite Lage oder die dritte Lage eine Heizvorrichtung, z.B. in Gestalt einer Sitzheizung.

Wie bereits erwähnt, umfasst die dritte Lage des erfindungsgemäßen Sitzes eine Luftleitschicht.

In einer bevorzugten Ausführungsform des erfindungsgemäßen Sitzes ist die von der dritten Lage umfasste Luftleitschicht ein Abstandsgewirke, z.B. in Gestalt einer Kettenwirkware oder einer Raschelware, oder ein Abstandsvlies oder ein retikulierter Schaum oder ein luftdurchlässiger Absorber für Feuchtigkeit, vorzugsweise für Wasser und Schweiß.

In der bevorzugten Ausführungsform des erfindungsgemäßen Sitzes, worin die Luftleitschicht ein Abstandsgewirke in Gestalt einer Kettenwirkware oder einer Raschelware ist, kann die Kettenwirkware doppelflächig ausgebildet sein. Die Gewirkebahnen können Abstandshalter-Bändchen oder Stege aufweisen. Ferner können die Abstandsstruktur und/oder die Gewirkebahnen mit Rechts-Rechts- oder Rechts-Links-Gewirkestruktur hergestellt sein. Die Abstandsstruktur kann eine Web-, Strick- oder Vliesstruktur sein, die z.B. aus Naturfasern oder aus synthetischen Fasern besteht, wobei die Fasern z.B. monofile Fasern oder multifile Fasern sein können. Der die Erfindung kennende Fachmann kann statt des Abstandsgewirkes einen retikulierten Polyurethan-Ester - Schaum oder einen retikulierten Polyurethan-Ether - Schaum einsetzen.

In einer weiteren bevorzugten Ausführungsform des erfindungsgemäßen Sitzes ist die dritte Lage an eine Klimaanlage oder an eine Fahrzeugbelüftung oder an Lüftungskanäle angeschlossen, wobei die Lüftungskanäle beispielsweise in das von der dritten Lage umfasste Abstandsgewirke eingearbeitet sind, wodurch die Feuchtigkeit, vorzugsweise der Schweiß und der Wasserdampf, die, wie vorstehend beschrieben, in der dritten Lage ankommen, noch effizienter aus dem von dem dritten Lage umfassten Abstandsgewirke heraus transportiert werden. Wenn die dritte Lage an eine fahrzeugeigene Klimaanlage angeschlossen ist, wird durch die individuell einstellbare Temperatur der Klimaanlage im Lagenaufbau des erfindungsgemäßen Sitzes eine Temperatur erreicht, die der Insasse als angenehm kühlend oder als angenehm temperiert empfindet.

Ferner betrifft die vorliegende Erfindung die Verwendung des Sitzes in Kraftfahrzeugen, Flugzeugen, Zügen, Bussen, Nutzfahrzeugen, Autokindersitzen, Kinderwagen und in Fahrzeugen mit Elektroantrieb.

Wie bereits erwähnt, kann der mindestens zwei Schichten umfassende Absorber auch luftdurchlässig sein, wenn zwischen der zweiten und dritten Lage des erfindungsgemäßen Sitzes eine wasserdichte und wasserdampfdurchlässige Membran angeordnet ist. In dieser bevorzugten Ausführungsform des erfindungsgemäßen Sitzes ist der von der zweiten Lage umfasste Absorber demnach vorzugsweise ein luftdurchlässiger Zweischichtenverbund, wobei der Zweischichtenverbund
- eine erste Schicht (2a) aufweist, die der ersten Lage zugewandt ist und eine erste Hydrophilie (I) aufweist, und
- eine zweite Schicht (2b) aufweist, die der zweiten Lage zugewandt ist und eine zweite Hydrophilie (II) aufweist, und
wobei die Hydrophilie (II) größer ist als die Hydrophilie (I).

Ein derartiger Zweischichtenverbund ist in der Veröffentlichung EP2763561 der Anmelderin, welche die Priorität der europäischen Patentanmeldung der Anmelderin mit der Anmeldenummer 11183965.0 beansprucht, detailliert beschrieben, wobei in den folgenden Absätzen auf die für den erfindungsgemäßen Sitz der vorliegenden Erfindung wichtigsten Aspekte eingegangen wird.

Der gewünschte Hydrophilie- bzw. Absorptionsgradient kann dabei grundsätzlich auf unterschiedliche Art und Weise erreicht werden. Neben dem Einsatz verschiedener Materialien oder Materialkombinationen mit inhärent unterschiedlicher Hydrophilie, z. B. (Polyester/Polyamid) oder (Polypropylen/ Polyamid), kann der Gradient auch dadurch eingestellt werden, dass die Fasern des Zweischichtenverbundes unterschiedliche Feinheiten aufweisen und/oder grobkapillarigere neben feinkapillarigeren Schichten vorliegen. Darüber hinaus sind auch die im Stand der Technik bekannten Ausrüstungsverfahren zur Veränderung der Hydrophilie/Hydrophobie von textilen Materialien geeignet, den gewünschten Hydrophilie- bzw. Absorptionsgradienten einzustellen.

In einer bevorzugten Ausführungsform enthält der luftdurchlässige Zweischichtenverbund mindestens eine Vliesschicht. Noch bevorzugter bestehen beide Schichten des luftdurchlässigen Zweischichtenverbunds aus Vliesschichten, die sich durch ihre zunehmende Hydrophilie in Richtung der wasserdichten und wasserdampfdurchlässigen Membran unterscheiden. So kann die der wasserdichten und wasserdampfdurchlässigen Membran zugewandte Schicht des Zweischichtenverbunds z.B. ein Polyamidvlies und die von der Membran abgewandte Schicht des Zweischichtenverbunds ein Polyestervlies sein. Der Zweischichtenverbund kann aus gleichen oder unterschiedlichen Materialien (z.B. aus Polyester oder Polyamid) bestehen. Sofern beide Schichten des Zweischichtenverbunds aus den gleichen Materialien bestehen, unterscheiden sich diese Materialien beispielsweise in ihrer Feinheit und/oder in ihrer Kapillarität.

In einer bevorzugten Ausführungsform ist der Zweischichtenverbund so aufgebaut, dass die der wasserdichten und wasserdampfdurchlässigen Membran zugewandte Schicht des Zweischichtenverbunds durch einen Vliesstoff aus feineren Fasern (z. B. Nanofasern, Microfasern oder Standardfasern) gebildet wird und die von der Membran abgewandte Schicht des Zweischichtverbunds durch einen Vliesstoff gebildet wird, der im Vergleich zu der der Membran zugewandten Schicht aus gröberen Fasern gebildet wird.

Auf diese Weise wird in einfacher und eleganter Art erreicht, dass der Feuchtigkeitstransport in Richtung der wasserdichten und wasserdampfdurchlässigen Membran effizient und schnell bewirkt wird.

In einer weiteren bevorzugten Ausführungsform enthält der Zweischichtenverbund als eines seiner Materialien Polyester und ist so aufgebaut, dass die der wasserdichten und wasserdampfdurchlässigen Membran zugewandte Schicht des Zweischichtenverbunds durch einen Vliesstoff mit einem geringeren Anteil an Polyester gebildet wird und die von der Membran abgewandte Schicht des Zweischichtverbunds durch einen Vliesstoff mit einem höheren Anteil an Polyester gebildet wird.

Besonders bevorzugt enthält der Zweischichtenverbund als weiteres Material Polyamid. Der Anteil der Materialien Polyester und Polyamid in den Schichten des Zweischichtenverbundes kann je nach gewünschtem Hydrophilie-Gradienten zwischen 0 und 100 % liegen.

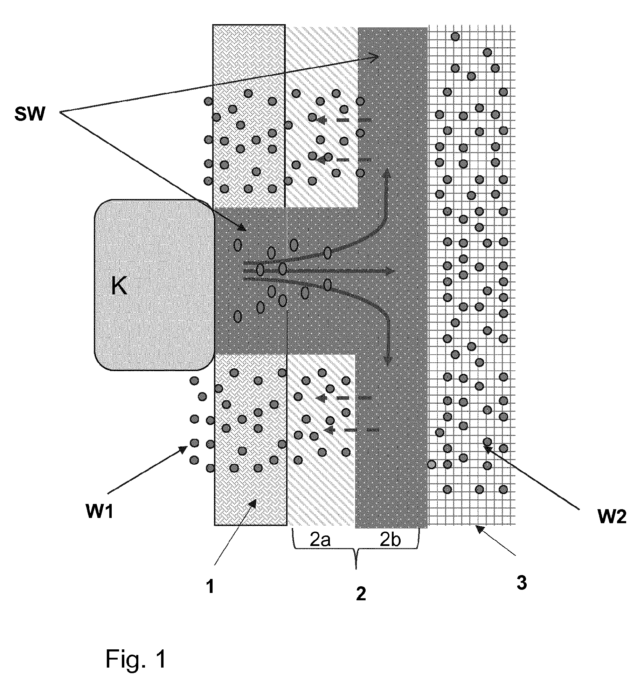

In Fig. 1 ist die Funktionsweise einer bevorzugten Ausführungsform des erfindungsgemäßen Sitzes dargestellt. In besagter bevorzugter Ausführungsform des erfindungsgemäßen Sitzes enthält die zweite Lage **2** einen Absorber in Gestalt des bereits beschriebenen Zweischichtenverbunds. Als dritte Lage **3** eine Luftleitschicht in Gestalt eines Abstandsgewirkes. Bei der in Fig. 1 gezeigten bevorzugten Ausführungsform des erfindungsgemäßen Sitzes ist der Zweischichtenverbund luftundurchlässig.

Fig. 1 zeigt die vorstehend beschriebene bevorzugte Ausführungsform des erfindungsgemäßen Sitzes und einen Körper **K** in Kontakt mit der Sitz-, bzw. Rückenfläche der ersten Lage **1** des erfindungsgemäßen Sitzes.

Ferner zeigt Fig. 1
- die zweite Lage **2** mit dem Absorber in Gestalt des bereits beschriebenen luftundurchlässigen Zweischichtenverbunds, welcher eine erste Schicht **2a** und eine zweiten Schicht **2b** aufweist, und
- die in Gestalt eines Abstandsgewirkes ausgebildete dritte Lage **3**
des erfindungsgemäßen Sitzes.

Da die höhere Hydrophilie (II) der zweiten Schicht **2b** des Absorbers Schweiß und Wasserdampf **SW** in das Abstandsgewebe saugt und wegen der niedrigeren Hydrophilie (I) der ersten Schicht **2a** des Absorbers der Schweiß und der Wasserdampf **SW** nicht wieder zurück können, kommt es für den Transport von Schweiß und Wasserdampf **SW** zu einer Vorzugsrichtung, die sich praktisch in der Art eines "Einbahnstraßeneffekts" äußert und in Fig. 1 durch die Pfeile mit durchgezogenen Linien symbolisiert ist.

Die zweite Schicht des Absorbers **2b** wiederum leitet den Schweiß und den Wasserdampf **SW** großflächig weiter. Dabei sorgt die zweite Schicht **2b** des Absorbers
- einerseits dafür, dass der Schweiß und der Wasserdampf **SW** seitlich vom Körper weggeleitet wird und dann in Richtung der gestrichelten Pfeile in Fig. 1 an Stellen als Wasserdampf **W1** aus dem Sitzstoff, bzw. aus dem atmungsaktiven Leder der ersten Lage **1** entweichen kann, an denen kein Körperkontakt besteht, also aus den Randbereichen der Sitzfläche und der Rückenfläche,
- andererseits dafür, dass ein entsprechend großes Volumen an Wasserdampf **W2** in das von der dritten Lage **3** des erfindungsgemäßen Sitzes umfasste Abstandsgewirke strömt, worin der Wasserdampf **W2** abgeführt wird.

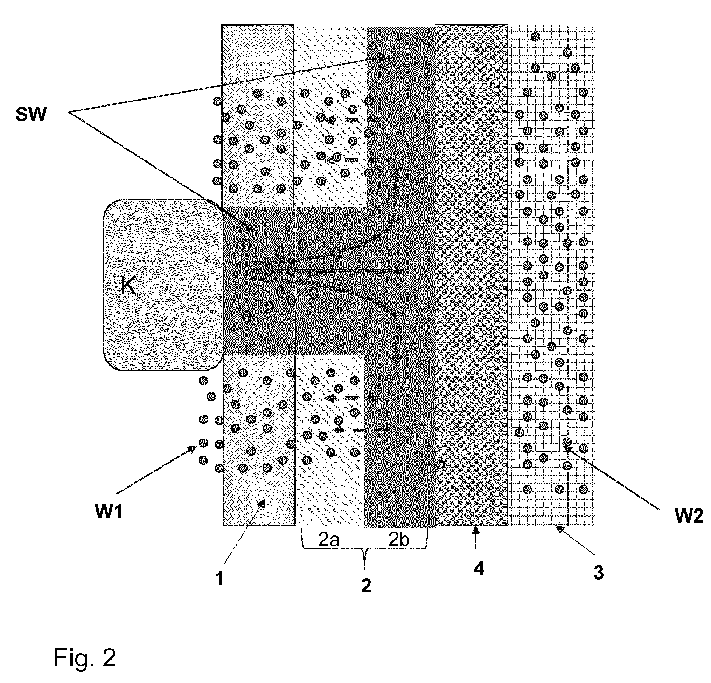

In Fig. 2 ist die Funktionsweise einer weiteren bevorzugten Ausführungsform des erfindungsgemäßen Sitzes dargestellt. In besagter weiterer bevorzugter Ausführungsform des erfindungsgemäßen Sitzes enthält die zweite Lage **2** einen Absorber in Gestalt des bereits beschriebenen Zweischichtenverbunds, eine zwischen der zweiten **2** und dritten Lage **3** angeordnete wasserdichte und wasserdampfdurchlässige Membran **4** und als dritte Lage **3** eine Luftleitschicht in Gestalt eines Abstandsgewirkes. Da die in Fig. 2 gezeigte bevorzugte Ausführungsform des erfindungsgemäßen Sitzes eine zwischen der zweiten **2** und dritten Lage **3** angeordnete wasserdichte und wasserdampfdurchlässige Membran **4** enthält, ist der Zweischichtenverbund luftdurchlässig.

Fig. 2 zeigt die vorstehend beschriebene bevorzugte Ausführungsform des erfindungsgemäßen Sitzes und einen Körper **K** in Kontakt mit der Sitz-, bzw. Rückenfläche der ersten Lage **1** des erfindungsgemäßen Sitzes.

Ferner zeigt Fig. 2
- die zweite Lage **2** mit dem Absorber in Gestalt des bereits beschriebenen luftdurchlässigen Zweischichtenverbunds, welcher eine erste Schicht **2a** und eine zweiten Schicht **2b** aufweist,
- die zwischen der zweiten **2** und dritten Lage **3** angeordnete wasserdichte und wasserdampfdurchlässige Membran **4** und
- die in Gestalt eines Abstandsgewirkes ausgebildete dritte Lage **3**
des erfindungsgemäßen Sitzes.

Da die höhere Hydrophilie (II) der zweiten Schicht **2b** des Absorbers Schweiß und Wasserdampf **SW** in Richtung der Membran **4** saugt und wegen der niedrigeren Hydrophilie (I) der ersten Schicht **2a** des Absorbers der Schweiß und der Wasserdampf **SW** nicht wieder zurück können, kommt es für den Transport von Schweiß und Wasserdampf **SW** zu einer Vorzugsrichtung, die sich praktisch in der Art eines "Einbahnstraßeneffekts" äußert und in Fig. 2 durch die Pfeile mit durchgezogenen Linien symbolisiert ist.

Die zweite Schicht des Absorbers **2b** wiederum leitet den Schweiß und den Wasserdampf **SW** großflächig weiter. Dabei sorgt die zweite Schicht **2b** des Absorbers
- einerseits dafür, dass der Schweiß und der Wasserdampf **SW** seitlich vom Körper weggeleitet wird und dann in Richtung der gestrichelten Pfeile in Fig. 2 an Stellen als Wasserdampf **W1** aus dem Sitzstoff, bzw. aus dem atmungsaktiven Leder der ersten Lage **1** entweichen kann, an denen kein Körperkontakt besteht, also aus den Randbereichen der Sitzfläche und der Rückenfläche,
- andererseits dafür, dass der Schweiß und der Wasserdampf **SW** großflächig an die Membran **4** weitergeleitet wird, wodurch die Membran **4** ebenfalls großflächig aktiviert wird, sodass die Umwandlung von Schweiß in Wasserdampf **SW** an der Grenzfläche, welche die zweite Schicht **2b** des Absorbers mit der Membran **4** bildet, entsprechend schnell stattfindet und ein entsprechend großes Volumen an Wasserdampf **W2** in das von der dritten Lage **3** des erfindungsgemäßen Sitzes umfasste Abstandsgewirke strömt, worin der Wasserdampf **W2** abgeführt wird.

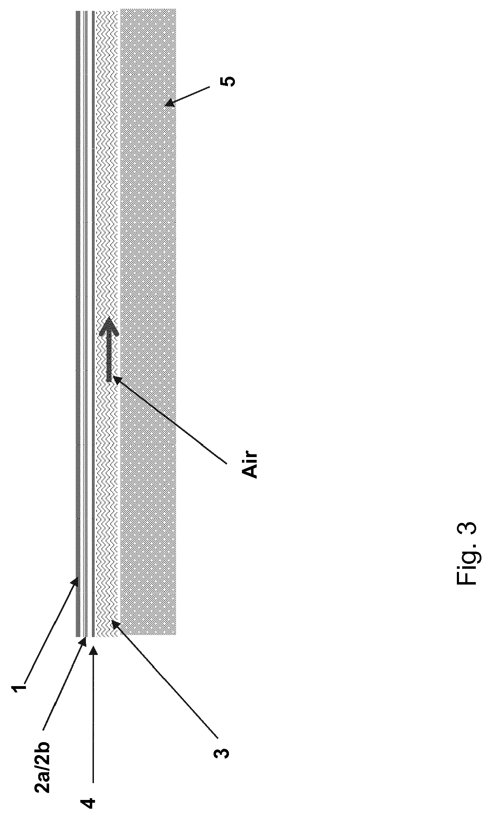

Fig. 3 zeigt den erfindungsgemäßen Sitz aus Fig. 2 nochmals in einer anderen Ansicht. Die Ziffern haben die gleiche Bedeutung wie in den vorhergehend beschriebenen Figuren 1 und 2.
Zusätzlich zeigt Fig. 3 schematisch einen Sitzschaum **5**, der unter der Lage **3** (enthaltend die Luftleitschicht) angeordnet ist. Durch den dicken Pfeil mit der Bezeichnung "Air" wird der in der Luftleitschicht stattfindende Abtransport dargestellt. Vorteilhaft kann die Luftleitschicht auch noch eine Sitzheizung aufweisen bzw. mit einer solchen verbunden sein.

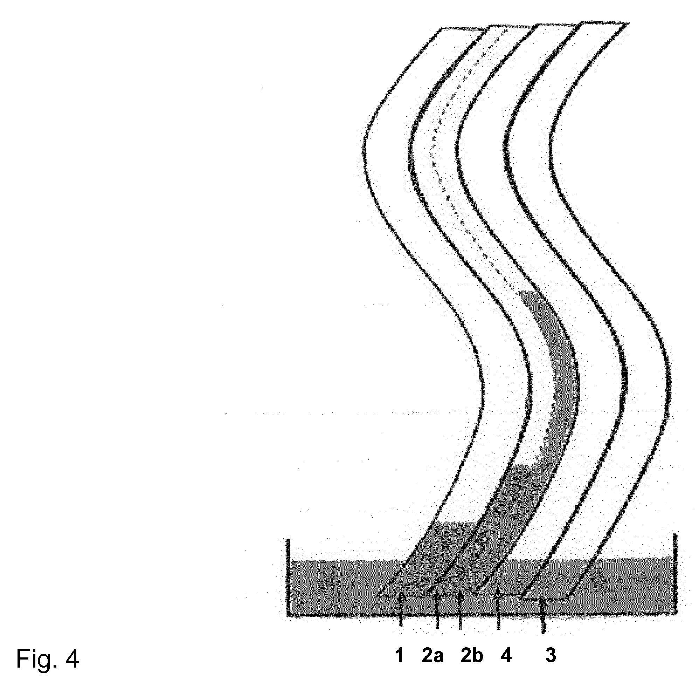

Fig. 4 schließlich stellt noch einmal die unterschiedlichen Hydrophiliegrade der einzelnen Lagen bzw. Schichten gemessen nach dem oben beschriebenen Steighöhenverfahren dar. Auch hier haben die Ziffern die gleiche Bedeutung wie in der Figuren 1 und 2.
Der Steighöhenverfahren zeigt, wie der Absorber (bzw. Superabsorber) in der Lage **2** (bestehend aus den Schichten **2a** und **2b**) das Wasser schnell absorbiert, und großflächig in Richtung der Membran **4** verteilt.

## Patentansprüche

1. Sitz umfassend eine Sitzfläche und eine Rückenfläche, wobei die Sitzfläche und
die Rückenfläche vollflächig mit einer Anordnung überzogen ist,
wobei die Anordnung eine erste (1), zweite (2) und dritte (3) Lage umfasst,
wobei
- die erste Lage (1) einen Sitzstoff oder ein Leder umfasst und eine einem Benutzer des Sitzes zugewandte Seite und eine vom Benutzer des Sitzes abgewandte Seite aufweist, wobei die erste Lage (1) mit ihrer vom Benutzer abgewandten Seite auf
- der zweiten Lage (2) angeordnet ist, die einen mindestens zwei Schichten umfassenden Absorber für Feuchtigkeit umfasst,
wobei die zweite Lage (2) eine der ersten Lage (1) zugewandte Seite und eine von der ersten Lage (1) abgewandte Seite aufweist, und wobei die zweite Lage (2) mit ihrer von der ersten Lage (1) abgewandten Seite auf
- der dritten Lage angeordnet ist, wobei die dritte Lage (3) eine Luftleitschicht umfasst,
**dadurch gekennzeichnet, dass** der Absorber
. eine erste Schicht (2a) aufweist, die der ersten Lage (1) zugewandt ist und eine erste Hydrophilie (I) aufweist, und
- eine zweite Schicht (2b) aufweist, die der dritten Lage (3) zugewandt ist und
eine zweite Hydrophilie (II) aufweist,
wobei die zweite Hydrophilie (II) grösser ist als die erste Hydrophilie (I).

2. Sitz nach Anspruch 1, **dadurch gekennzeichnet, dass** die erste Lage (1) mit ihrem vom Benutzer des Sitzes abgewandten Seite auf der zweiten Lage (2) durch Verkleben, Verschweißen, Versteppen, Vernähen oder Flammkaschieren angeordnet ist.

3. Sitz nach Anspruch 1 oder 2, **dadurch gekennzeichnet, dass** die zweite Lage (2) mit ihrer von der ersten Lage (1) abgewandten Seite auf der dritten Lage (3) durch Verkleben, Verschweißen, Versteppen, Vernähen oder Flammkaschieren angeordnet ist.

4. Sitz nach Anspruch 1, **dadurch gekennzeichnet, dass** zwischen der zweiten (2) und der dritten Lage (3) eine wasserdichte und wasserdampfdurchlässige Membran (4) angeordnet ist.

5. Sitz nach Anspruch 4, **dadurch gekennzeichnet, dass** die Membran (4) auf ihrer der zweiten Lage (2) zugewandten Seite durch Verkleben, Verschweißen oder Flammkaschieren angeordnet ist.

6. Sitz nach Anspruch 4 oder 5, **dadurch gekennzeichnet, dass** die Membran (4) auf ihrer der dritten Lage (3) zugewandten Seite durch Verkleben, Verschweißen oder Flammkaschieren angeordnet ist.

7. Sitz nach einem oder mehreren der Ansprüche 4 bis 6, **dadurch gekennzeichnet, dass** die Membran (4) aus gerecktem Polytetrafluorethylen, Polyetherester, Polyetheramid, Polyetherurethan oder Polyurethan besteht.

8. Sitz nach einem oder mehreren der Ansprüche 1 bis 7, **dadurch gekennzeichnet, dass** der von der ersten Lage (1) umfasste Sitzstoff ein Gewebe, eine Maschenware, ein Vliesstoff oder ein 3-D-Oberstoff ist.

9. Sitz nach einem oder mehreren der Ansprüche 1 bis 8, **dadurch**
**gekennzeichnet, dass** der von der ersten Lage (1) umfasste Sitzstoff aus Synthesefasern oder Naturfasern oder aus Fasern aus regenerierter Cellulose oder aus einer Mischung von mindestens zwei der genannten Faserarten besteht.

10. Sitz nach einem oder mehreren der Ansprüche 1 bis 7, **dadurch gekennzeichnet, dass** ein von der ersten Lage (1) umfasstes Leder ein atmungsaktives Naturleder oder ein atmungsaktives Kunstleder oder ein perforiertes Naturleder oder ein perforiertes Kunstleder ist.

11. Sitz nach einem oder mehreren der Ansprüche 1 bis 10, **dadurch gekennzeichnet, dass** der von der zweiten Lage (2) umfasste Absorber luftundurchlässig ist.

12. Sitz nach einem oder mehreren der Ansprüche 1 bis 11, **dadurch gekennzeichnet, dass** entweder die erste Lage (1) oder die zweite Lage (2) oder die dritte Lage (3) eine Heizvorrichtung enthält.

13. Sitz nach einem oder mehreren der Ansprüche 1 bis 12, **dadurch gekennzeichnet, dass** die von der dritten Lage (3) umfasste Luftleitschicht ein Abstandsgewirke, oder ein Abstandsvlies, oder ein retikulierter Schaum, oder ein luftdurchlässiger Absorber für Feuchtigkeit ist.

14. Sitz nach einem oder mehreren der Ansprüche 1 bis 13, **dadurch gekennzeichnet, dass** die dritte Lage (3) an eine Klimaanlage oder an eine Fahrzeugbelüftung oder an Lüftungskanäle angeschlossen ist, wobei die Lüftungskanäle in das von der dritten Lage (3) umfasste Abstandsgewirke eingearbeitet sind.

15. Verwendung des Sitzes nach einem oder mehreren der Ansprüche 1 bis 11 in Kraftfahrzeugen, Flugzeugen, Zügen, Bussen, Nutzfahrzeugen, Autokindersitzen, Kinderwagen und in Fahrzeugen mit Elektroantrieb.

## Claims

1. Seat comprising a sitting surface and a back surface, wherein the sitting surface and the back surface are completely covered with an arrangement,
wherein the arrangement comprises a first (1), second (2) and third (3) layer, wherein
- the first layer (1) comprises a seat fabric or a leather and has a side facing a user of the seat and a side facing away from the user of the seat, wherein the side of the first layer (1) facing away from the user is arranged on
- the second layer (2), which comprises an absorber for moisture comprising at least two component layers,
wherein the second layer (2) has a side facing the first layer (1) and a side facing away from the first layer (1), and wherein the side of the second layer (2) facing away from the first layer (1) is arranged on
- the third layer, wherein the third layer (3) comprises an air duct layer, **characterised in that** the absorber
- has a first component layer (2a) facing the first layer (1) and having a first hydrophilicity (I), and
- has a second component layer (2b) facing the third layer (3) and having a second hydrophilicity (II),
wherein the second hydrophilicity (II) is greater than the first hydrophilicity (I).

2. Seat according to Claim 1, **characterised in that** the side of the first layer (1) facing away from the user of the seat is arranged on the second layer (2) by means of bonding, welding, quilting, sewing or flame lamination.

3. Seat according to Claim 1 or 2, **characterised in that** the side of the second layer (2) facing away from the first layer (1) is arranged on the third layer (3) by means of bonding, welding, quilting, sewing or flame lamination.

4. Seat according to Claim 1, **characterised in that** a waterproof and water vapourpermeable membrane (4) is arranged between the second (2) and third (3) layer.

5. Seat according to Claim 4, **characterised in that** the membrane (4) is arranged on the side facing the second layer (2) by means of bonding, welding or flame lamination.

6. Seat according to Claim 4 or 5, **characterised in that** the membrane (4) is arranged on the side facing the third layer (3) by means of bonding, welding or flame lamination.

7. Seat according to one or more of Claims 4 to 6, **characterised in that** the membrane (4) is made of expanded polytetrafluoroethylene, polyether ester, polyether amide, polyether urethane or polyurethane.

8. Seat according to one or more of Claims 1 to 7, **characterised in that** the seat fabric that the first layer (1) comprises is a woven fabric, a knitted fabric, a nonwoven fabric or a 3D outer material.

9. Seat according to one or more of Claims 1 to 8, **characterised in that** the seat fabric that the first layer (1) comprises is made of synthetic fibres or natural fibres or of fibres of regenerated cellulose or of a mixture of at least two of the stated fibre types.

10. Seat according to one or more of Claims 1 to 7, **characterised in that** a leather that the first layer (1) comprises is a breathable natural leather or a breathable synthetic leather or a perforated natural leather or a perforated synthetic leather.

11. Seat according to one or more of Claims 1 to 10, **characterised in that** the absorber that the second layer (2) comprises is air impermeable.

12. Seat according to one or more of Claims 1 to 11, **characterised in that** either the first layer (1) or the second layer (2) or the third layer (3) contains a heating device.

13. Seat according to one or more of Claims 1 to 12, **characterised in that** the air duct layer that the third layer (3) comprises is a knitted spacer fabric, or a nonwoven spacer fabric, or a reticulated foam, or an air-permeable absorber of moisture.

14. Seat according to one or more of Claims 1 to 13, **characterised in that** the third layer (3) is connected to an air conditioning system or vehicle ventilation system or ventilation channels, wherein the ventilation channels are incorporated into the knitted spacer fabric that the third layer (3) comprises.

15. Use of the seat according to one or more of Claims 1 to 11 in motor vehicles, aeroplanes, trains, buses, commercial vehicles, child car seats, prams and in vehicles with electric drive.

## Revendications

1. Siège comprenant une surface d'assise et une surface de dossier, la surface d'assise et la surface de dossier étant revêtues sur toute leur étendue d'un agencement, l'agencement comprenant une première couche (1), une deuxième couche (2) et une troisième couche (3),
- la première couche (1) comportant un textile de siège ou un cuir et présentant une face orientée vers l'utilisateur du siège et une face orientée à l'écart de l'utilisateur du siège, la première couche (1) étant disposée avec sa face orientée à l'écart de l'utilisateur vers
- la deuxième couche (2) qui comprend un absorbeur d'humidité comportant au moins deux couches, la deuxième couche (2) présentant une face orientée vers la première couche (1) et une face orientée à l'écart de la première couche (1) et la deuxième couche (2) étant disposée sur la troisième couche avec sa face orientée à l'écart de la première couche (1) sur
- la troisième couche (3) comportant elle-même une couche conductrice d'air,
**caractérisé en ce que** l'absorbeur
- présente une première couche (2a) qui est orientée vers la première couche (1) et qui présente une première hydrophilie (I), et
- **en ce qu'**il présente une deuxième couche (2b) qui est orientée vers la troisième couche (3) et qui présente une deuxième hydrophilie (II),
- la deuxième hydrophilie (II) étant supérieure à la première hydrophilie (I).

2. Siège selon la revendication 1 **caractérisé en ce que** la première couche (1) est disposée sur la deuxième couche (2) avec sa face orientée à l'écart de l'utilisateur du siège, au moyen d'un collage, d'un soudage, d'une piqûre, d'une couture ou d'un contrecollage à la flamme.

3. Siège selon la revendication 1 ou 2 **caractérisé en ce que** la deuxième couche (2) est disposée sur la troisième couche (3) avec sa face orientée à l'écart de la première couche (1), au moyen d'un collage, d'un soudage, d'une piqûre, d'une couture ou d'un contrecollage à la flamme.

4. Siège selon la revendication 1 **caractérisé en ce qu'**entre la deuxième couche (2) et la troisième couche (3) est disposée une membrane (4) étanche à l'eau et perméable à la vapeur d'eau.

5. Siège selon la revendication 4 **caractérisé en ce que** la membrane (4) est disposée sur sa face orientée vers la deuxième couche (2), au moyen d'un collage, d'un soudage ou d'un contrecollage à la flamme.

6. Siège selon la revendication 4 ou 5 **caractérisé en ce que** la membrane (4) est disposée sur sa face orientée vers la troisième couche (3), au moyen d'un collage, d'un soudage ou d'un contrecollage à la flamme.

7. Siège selon une ou plusieurs des revendications 4 à 6 **caractérisé en ce que** la membrane (4) est constituée de polytétrafluoréthylène, d'ester de polyéther, d'amide de polyéther, de polyétheruréthanne ou de polyuréthanne étirés.

8. Siège selon une ou plusieurs des revendications 1 à 7 **caractérisé en ce que** le textile de siège que comprend la première couche (1) est un tissu, un matériau tricoté, un non-tissé ou un matériau de dessus 3D.

9. Siège selon une ou plusieurs des revendications 1 à 8 **caractérisé en ce que** le textile de siège que comprend la première couche (1) est constitué de fibres synthétiques ou de fibres naturelles ou de fibres de cellulose régénérée ou d'un mélange d'au moins deux des sortes de fibres citées.

10. Siège selon une ou plusieurs des revendications 1 à 7 **caractérisé en ce qu'**un cuir constituant la première couche (1) est un cuir naturel perspirant ou un cuir artificiel perspirant ou un cuir naturel perforé ou un cuir artificiel perforé.

11. Siège selon une ou plusieurs des revendications 1 à 10 **caractérisé en ce que** l'absorbeur compris dans la deuxième couche (2) est imperméable à l'air.

12. Siège selon une ou plusieurs des revendications 1 à 11 **caractérisé en ce que** soit la première couche (1), soit la deuxième couche (2), soit la troisième couche (3) contient un dispositif de chauffage.

13. Siège selon une ou plusieurs des revendications 1 à 12 **caractérisé en ce que** la couche conductrice d'air comprise dans la troisième couche (3) est un tricot lâche, ou un non-tissé lâche ou une mousse réticulée ou un absorbeur d'humidité perméable à l'air.

14. Siège selon une ou plusieurs des revendications 1 à 13 **caractérisé en ce que** la troisième couche (3) est raccordée à une installation de climatisation ou à un dispositif de ventilation de véhicule ou à des canaux d'aération, les canaux d'aération étant incorporés dans le tricot lâche constituant la troisième couche (3).

15. Utilisation du siège selon une ou plusieurs des revendications 1 à 11 dans des véhicules à moteur, des avions, des trains, des autobus, des véhicules utilitaires, des sièges de voiture pour enfants, des voitures d'enfants et dans des véhicules à entraînement électrique.
